# EUROPÄISCHE PATENTSCHRIFT

(11) **EP 3 772 158 B1**
(45) Veröffentlichungstag und Bekanntmachung des Hinweises auf die Patenterteilung: **29.09.2021**
(21) Anmeldenummer: 19189800.6
(22) Anmeldetag: 02.08.2019
(51) Int. Cl.: H02K 3/38, H02K 15/00, H02K 15/10, H01B 7/02, H02K 3/30

(54) **ISOLATION VON WICKLUNGSENDEN EINER STATORWICKLUNG**
INSULATION OF THE ENDS OF A STATOR WINDING
ISOLATION DES EXTRÉMITÉS D'ENROULEMENT D'UN ENROULEMENT DE STATOR

(43) Veröffentlichungstag der Anmeldung: 03.02.2021
(73) Patentinhaber: Siemens Aktiengesellschaft, 80333 München (DE)
(72) Erfinder: Büttner, Klaus, 97618 Hollstadt (DE); Katzenberger, Tobias, 97631 Bad Königshofen STT Untereßfeld (DE); Kirchner, Klaus, 97645 Ostheim (DE); Plochmann, Bastian, 91413 Neustadt an der Aisch (DE); Warmuth, Matthias, 97618 Windshausen (DE)

(56) Entgegenhaltungen:
- JP-A- 2002 033 213
- US-A- 5 210 928
- US-A1- 2016 344 269
- US-B1- 6 361 632

## Beschreibung

Die vorliegende Erfindung geht aus von einem Herstellungsverfahren für einen Stator einer elektrischen Maschine, insbesondere einer rotatorischen elektrischen Maschine,
- wobei der Stator ein Blechpaket aufweist,
- wobei in das Blechpaket Nuten eingebracht sind und in die Nuten die Wicklungen eines mehrphasigen Wicklungssystems eingebracht sind,
- wobei die Wicklungen Wicklungsenden aufweisen, die über eine Teillänge mit einem Isolator umhüllt werden.

Die vorliegende Erfindung geht weiterhin aus von einem Stator einer elektrischen Maschine, insbesondere einer rotatorischen elektrischen Maschine,
- wobei der Stator ein Blechpaket aufweist,
- wobei in das Blechpaket Nuten eingebracht sind und in die Nuten die Wicklungen eines mehrphasigen Wicklungssystems eingebracht sind,
- wobei die Wicklungen Wicklungsenden aufweisen, die über eine Teillänge mit einem Isolator umhüllt sind,
- wobei der Isolator aus einem thermoplastischen Material besteht.

Die vorliegende Erfindung geht weiterhin aus von einer elektrischen Maschine, insbesondere einer rotatorischen elektrischen Maschine, wobei die elektrische Maschine einen derartigen Stator aufweist.

Elektrische Maschinen werden mit einer sehr hohen Anzahl an verschiedenen Bauformen gebaut. Beispielsweise bieten einzelne Hersteller im Bereich von Niederspannungs-Industriemotoren oftmals über 1000 verschiedene Bauformen an. Diese Vielzahl an verschiedenen Varianten macht eine vollautomatisierte Fertigung oftmals ineffizient. Vielmehr wird ein hoher Anteil der elektrischen Maschinen an Handarbeitsplätzen gefertigt. Insbesondere die Wicklungsenden, über welche im späteren Betrieb der elektrischen Maschine die Wicklungen mit elektrischer Energie versorgt werden, variieren oftmals in Querschnitt, Länge, Austrittsbereich am Wickelkopf der Wicklungen und Isolationsdicke der einzelnen Adern des jeweiligen Wicklungsendes und auch bezüglich der Anzahl an einzelnen Drähten. Der auf die jeweilige Anschlussleitung aufgebrachte Isolator muss auf diese Konstellation abgestimmt sein.

Im Stand der Technik werden die Wicklungsenden (genauer: die einzelnen Drähte des jeweiligen Wicklungsendes) gebündelt und mittels einer schlauchförmigen Ummantelung mechanisch und elektrisch geschützt, so dass das jeweilige Wicklungsende im weiteren Fertigungsverlauf aus dem Gehäuse der elektrischen Maschine zum Klemmenkasten geführt werden kann. Die Ummantelung ist der Isolator. Sie ist in der Regel als Glasgewebeschlauch ausgebildet. In manchen Fällen ist die Ummantelung mit Polyurethan oder Silikon beschichtet. Die Ummantelung wird manuell auf das jeweilige Wicklungsende aufgebracht. Zum Aufbringen der Ummantelung werden die Enden der Drähte des jeweiligen Wicklungsendes in ein Ende der Ummantelung geführt und durch die Ummantelung hindurch geschoben. Je nach Länge der Ummantelung ist dieser Vorgang sehr zeitaufwendig und erfordert viel Geschick und Übung. Maschinelle Lösungen sind aufwendig und aufgrund der großen Vielzahl an möglichen Konstellationen oftmals nicht rentabel. US2016/344269 offenbart eine Maschine, wobei die Wicklungsenden mit einem Isolierrohr isoliert werden.

Zum Aufbringen der jeweiligen Ummantelung müssen zunächst die möglichen Ummantelungen als Meterware vorrätig gehalten werden. Ein Mensch wählt für das jeweilige Wicklungsende die "richtige" Ummantelung aus, längt sie ab und führt sodann die Drähte des jeweiligen Wicklungsendes durch die abgelängte Ummantelung hindurch. In der Regel werden hierbei an ein und demselben Arbeitsplatz die Wicklungsenden von verschiedenen elektrischen Maschinen mit ihrer jeweiligen Ummantelung versehen, so dass eine Vielzahl an möglichen Ummantelungen vorgehalten werden muss. Dadurch ergibt sich insbesondere auch die Möglichkeit, dass der betreffende Mitarbeiter versehentlich die "falsche" Ummantelung ablängt, was mit vermehrtem Zeitaufwand verbunden ist, oder sogar die "falsche" Ummantelung auf das jeweilige Wicklungsende aufbringt, was mit Ausschuss oder späterem Versagen im Betrieb der elektrischen Maschine verbunden ist.

In manchen Fällen wird alternativ mit Litzenleitern gearbeitet. In diesem Fall sind die Wicklungsenden sehr kurz und die Litzenleiter werden an die Wicklungsenden angelötet. Auch diese Vorgehensweise ist mit erheblichen Nachteilen behaftet.

Die Aufgabe der vorliegenden Erfindung besteht darin, Möglichkeiten zu schaffen, mittels derer die Nachteile des Standes der Technik vermieden werden können.

Die Aufgabe wird durch ein Herstellungsverfahren mit den Merkmalen des Anspruchs 1 gelöst. Vorteilhafte Ausgestaltungen des Herstellungsverfahrens sind Gegenstand der abhängigen Ansprüche 2 bis 10.

Erfindungsgemäß wird ein Herstellungsverfahren der eingangs genannten Art dadurch ausgestaltet,
- dass zum Umhüllen der Wicklungsenden mit dem Isolator mittels einer Düse ein Strang eines thermoplastischen Materials auf die Wicklungsenden aufgespritzt wird und
- dass die Düse während des Aufspritzens relativ zum jeweiligen Wicklungsende entlang der Längserstreckung des jeweiligen Wicklungsendes verfahren wird und dem Verfahren entlang der Längserstreckung eine mit einer Oszillationsfrequenz oszillierende Bewegung der Düse quer zur Längserstreckung des jeweiligen Wicklungsendes überlagert wird, so dass das thermoplastische Material sich in Form von Schlingen auf das jeweilige Wicklungsende und um das jeweilige Wicklungsende herum legt.

Dadurch kann ein und dasselbe Material verwendet werden, und zwar unabhängig davon, auf welche Art von Wicklungsende der Isolator aufgebracht werden soll.

Vorzugsweise ist das Herstellungsverfahren dadurch ausgestaltet,
- dass die Verfahrbewegung der Düse entlang der Längserstreckung des jeweiligen Wicklungsendes sich aus einer Basisbewegung und einer Zusatzbewegung zusammensetzt,
- dass die Basisbewegung eine kontinuierliche Bewegung entlang der Längserstreckung des jeweiligen Wicklungsendes mit einer festen Verfahrgeschwindigkeit ist,
- dass die Zusatzbewegung eine mit einer Amplitude und einer Zusatzfrequenz oszillierende Bewegung ist und
- dass die feste Verfahrgeschwindigkeit kleiner als das Vierfache des Produkts der Amplitude und der Zusatzfrequenz ist, vorzugsweise kleiner als das Produkt der Amplitude und der Zusatzfrequenz.

Dadurch können die Wicklungsenden auf einfache Weise mit einer vollständig geschlossenen Isolierschicht umhüllt werden.

Im einfachsten Fall ist die Oszillationsfrequenz gleich der Zusatzfrequenz und sind weiterhin die oszillierende Bewegung der Düse und die Zusatzbewegung um 90° gegeneinander phasenversetzt. Dadurch können die einzelnen Schlingen auf besonders einfache Art und Weise gebildet werden. Die Gleichheit der beiden Frequenzen und der Phasenversatz der beiden Bewegungen gegeneinander kann beispielsweise dadurch erreicht werden, dass die Düse eine rotierende Bewegung ausführt.

Vorzugsweise wird das thermoplastische Material der Düse mit einem Arbeitsdruck zugeführt, der zwischen 1 bar und 10 bar liegt. Dieser Druck hat in Versuchen zu guten Ergebnissen geführt, insbesondere zu einer optimierten Austrittsgeschwindigkeit des Strangs aus der Düse.

Vorzugsweise wird das thermoplastische Material der Düse mit einer Arbeitstemperatur zugeführt, die zwischen 180 °C und 220 °C liegt. Dieser Temperaturbereich bewirkt in der Regel eine gute Viskosität des thermoplastischen Materials, so dass einerseits gute Fließeigenschaften gegeben sind, andererseits aber die Gefahr eines Abreißens des Strangs nach dem Auftreffen eines bestimmten Abschnitts des Strangs auf der jeweiligen Anschlussleitung vermieden werden kann.

Das thermoplastische Material kann insbesondere ein Polyolefin oder ein Polyamid sein.

Vorzugsweise erfolgt das Aufspritzen des thermoplastischen Materials in einem einzigen Arbeitsgang und aus einer einzigen Richtung. Dennoch kann eine vollständige Umhüllung des jeweiligen Wicklungsendes erreicht werden, also auch auf der Seite des jeweiligen Wicklungsendes, die von der Düse abgewandt ist. Es muss lediglich die Amplitude der oszillierenden Bewegung der Düse quer zur Längserstreckung des jeweiligen Wicklungsendes so gewählt werden, dass die jeweils gebildete Schlinge lang genug ist, so dass sie sich nach dem Anlegen an das jeweilige Wicklungsende zumindest bis zu der von der Düse abgewandten Seite des jeweiligen Wicklungsendes erstreckt.

Die Wicklungsenden weisen in der Regel jeweils mehrere Drähte auf. Vorzugsweise werden die Drähte vor dem Aufspritzen des thermoplastischen Materials miteinander verdrillt. Dadurch kann der Querschnitt des jeweiligen Wicklungsendes kompakt gehalten werden.

Vorzugsweise erfolgt das Aufspritzen des thermoplastischen Materials vollautomatisch, insbesondere mit einem Roboter. Dadurch können Herstellungskosten reduziert werden.

Vorzugsweise werden vor dem Aufspritzen des thermoplastischen Materials auf das Wicklungsende mittels eines optischen Erfassungssystems der Ort und der Verlauf der Anschlussleitungen erfasst. In diesem Fall werden der erfasste Ort und der erfasste Verlauf des Wicklungsendes beim Verfahren der Düse entlang der Längserstreckung des jeweiligen Wicklungsendes und bei der oszillierenden Bewegung der Düse quer zur Längserstreckung des jeweiligen Wicklungsendes berücksichtigt. Dadurch kann die Aufbringung des thermoplastischen Materials auf das jeweilige Wicklungsende optimiert werden.

Die Aufgabe wird weiterhin durch einen Stator mit den Merkmalen des Anspruchs 11 gelöst. Vorteilhafte Ausgestaltungen des erfindungsgemäßen Stators sind Gegenstand der abhängigen Ansprüche 12 und 13.

Erfindungsgemäß wird einen Stator der eingangs genannten Art dadurch ausgestaltet, dass der Isolator in Form von Strängen auf die Wicklungsenden aufgespritzt ist, so dass die Stränge des Isolators in Form von Schlingen auf das jeweilige Wicklungsende und um das jeweilige Wicklungsende herum aufgebracht sind.

Das thermoplastische Material kann insbesondere ein Polyolefin oder ein Polyamid sein.

Die Wicklungsenden weisen in der Regel jeweils mehrere Drähte auf. Vorzugsweise sind die Drähte miteinander verdrillt. Dadurch kann der Querschnitt des jeweiligen Wicklungsendes kompakt gehalten werden.

Die Aufgabe wird weiterhin durch eine elektrische Maschine mit den Merkmalen des Anspruchs 14 gelöst. Erfindungsgemäß weist die elektrische Maschine einen erfindungsgemäßen Stator auf.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen Schnitt durch eine rotatorische elektrische Maschine,
- FIG 2: einen Schnitt durch die elektrische Maschine längs einer Linie II-II in FIG 1,
- FIG 3: eine Draufsicht auf einen Wicklungskopf der elektrischen Maschine von FIG 1 aus einer Richtung III,
- FIG 4: ein einzelnes Wicklungsende mit einem Isolator,
- FIG 5 und 6: das Wicklungsende von FIG 4 vor dem Aufbringen des Isolators in zeitlich aufeinanderfolgenden Zuständen,
- FIG 7: das Aufbringen des Isolators auf die Anschlussleitung von FIG 6,
- FIG 8 bis 10: das Aufbringen einer einzelnen Schlinge des Isolators auf das Wicklungsende von FIG 6 in einer anderen Ansicht,
- FIG 11: einen Düsenkopf,
- FIG 12: zwei zeitlich unmittelbar nacheinander auf ein Wicklungsende aufgebrachte Schlingen,
- FIG 13: eine Fertigungseinrichtung und
- FIG 14: einen Ausschnitt eines Isolators.

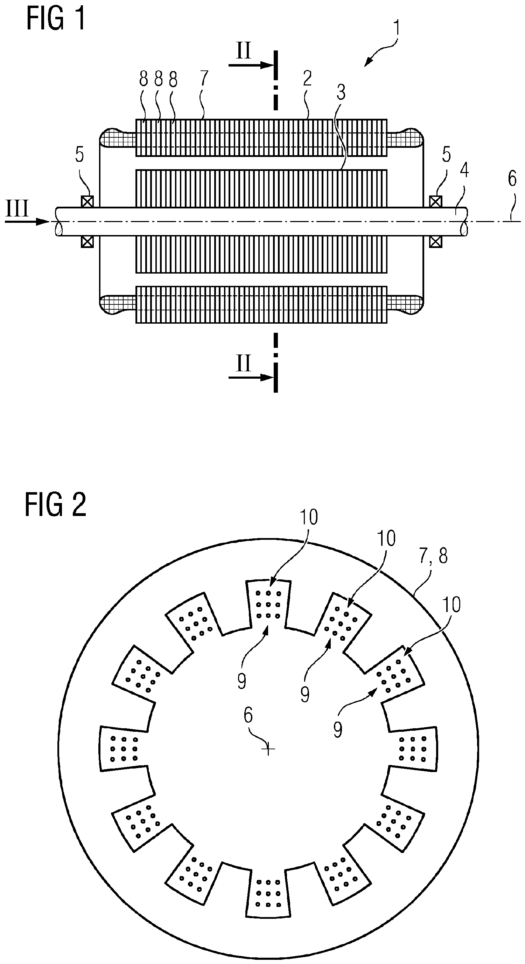

Gemäß FIG 1 weist eine elektrische Maschine 1 einen Stator 2 auf. Die elektrische Maschine 1 kann im Einzelfall als lineare elektrische Maschine ausgebildet sein. In der Regel ist sie jedoch als als rotatorische elektrische Maschine ausgebildet und weist daher zusätzlich zum Stator 2 auch einen Rotor 3 auf. Der Rotor 3 ist im Falle einer rotatorischen elektrischen Maschine drehbar auf einer Rotorwelle 4 angeordnet, die ihrerseits in Lagern 5 drehbar gelagert ist. Dadurch sind die Rotorwelle 4 und der Rotor 3 um eine Rotationsachse 6 rotierbar. Ein üblicherweise vorhandenes Gehäuse, Lagerschilde und andere Komponenten der elektrischen Maschine 1, die im Rahmen der vorliegenden Erfindung von untergeordneter Bedeutung sind, sind in FIG 1 nicht mit dargestellt.

Der Stator 2 weist ein Blechpaket 7 mit einer Vielzahl von einzelnen Statorblechen 8 auf. Von den Statorblechen 8 sind in FIG 1 nur einige wenige mit ihrem Bezugszeichen versehen, um FIG 1 nicht unnötig zu überfrachten. Das Herstellen des Blechpakets 7 erfolgt auf konventionelle Art und Weise und muss daher nicht näher erläutert werden. Die FIG 2 zeigt einen Schnitt durch das Blechpaket 7. Aus FIG 2 ist insbesondere erkennbar, dass in das Blechpaket 7 Nuten 9 eingebracht sind. Die Nuten 9 können - wie allgemein üblich - dadurch in das Blechpaket 7 eingebracht werden, dass bereits die Statorbleche 8 entsprechend ausgestanzt werden. Von den Nuten 9 sind in FIG 2 nur einige mit ihrem Bezugszeichen versehen.

In die Nuten 9 sind Wicklungen 10 eines Statorwicklungssystems eingebracht. Die Wicklungen 10 bilden ein mehrphasiges Statorwicklungssystem. Die Wicklungen 10 der einzelnen Phasen werden in der Regel sequenziell nacheinander in die Nuten 9 eingebracht. Das Einführen der Wicklungen 10 als solches erfolgt auf konventionelle Art und Weise und muss daher nicht näher erläutert werden. Die Wicklungen 10 können nach Bedarf als sogenannte wilde Wicklungen oder als sogenannte gelegte Wicklungen ausgebildet sein.

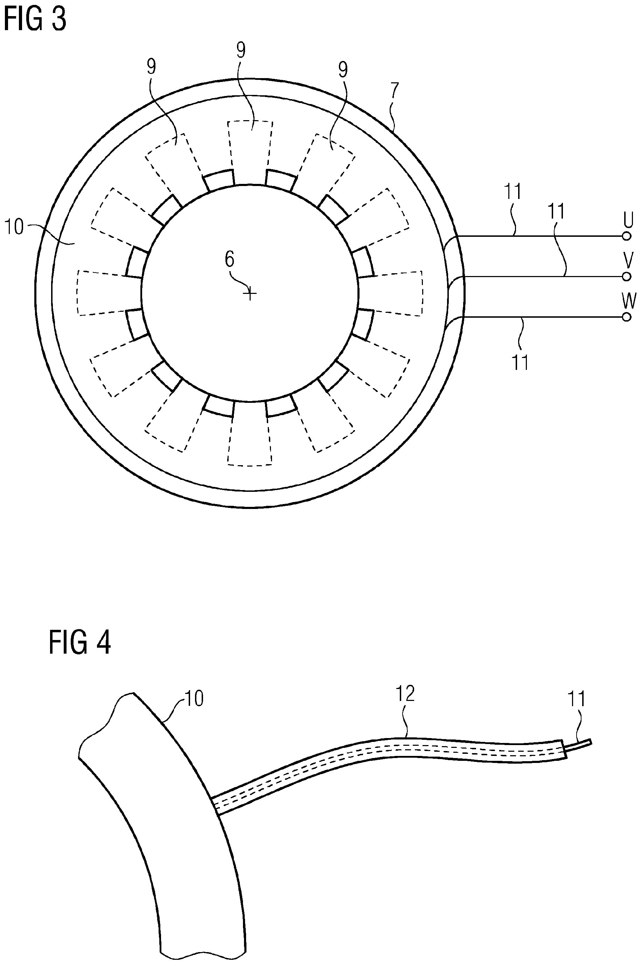

FIG 3 zeigt einen der beiden Wicklungsköpfe der elektrischen Maschine 1. Gemäß FIG 3 weisen die Wicklungen 10 im Bereich mindestens eines der beiden Wicklungsköpfe - meist nur im Bereich eines einzigen der beiden Wicklungsköpfe - Wicklungsenden 11 auf. Mittels der Wicklungsenden 11 werden die Wicklungen 10 im Betrieb der elektrischen Maschine 1 mit Versorgungsspannungen beaufschlagt, beispielsweise mit den Versorgungsspannungen U, V, W eines dreiphasigen Drehstromsystems.

In der Regel weisen die Wicklungsenden 11 zunächst nur eine isolierende Beschichtung in Form eines Isolierlacks auf. Die isolierende Beschichtung ist in den FIG nicht mit dargestellt. Diese isolierende Beschichtung könnte bei der Handhabung der Wicklungsenden 11 sehr leicht verletzt werden, sofern die Wicklungsenden 11 so wie sie sind gehandhabt werden. Aus Gründen der elektrischen Spannungssicherheit und der Betriebssicherheit werden die Wicklungsenden 11 daher entsprechend der Darstellung in FIG 4 mit einem Isolator 12 umhüllt. Der Isolator 12 besteht aus einem thermoplastischen Material. Beispiele geeigneter Materialien sind insbesondere Polyolefine und Polyamide. Konkret wurden gute Ergebnisse erzielt mit den Materialien 3M Scotch Weld 3731, 3789 und 3779 der Firma 3M, wobei das erstgenannte Material ein Polyolefin ist und die beiden anderen Materialien Polyamide sind.

Das Umhüllen mit dem Isolator 12 erfolgt, wie in FIG 4 exemplarisch für eines der Wicklungsenden 11 dargestellt ist, jedoch nur über eine Teillänge des jeweiligen Wicklungsendes 11. Insbesondere erfolgt das Umhüllen mit dem Isolator 12 in der Regel beginnend am entsprechenden Wicklungskopf und endet kurz vor dem Ende des jeweiligen Wicklungsendes 11. An dem nicht umhüllten Ende des jeweiligen Wicklungsendes 11 erfolgt später in einem Klemmenkasten der elektrischen Maschine 1 der Anschluss der entsprechenden Versorgungsspannung U, V, W. Das Aufbringen des Isolators 12 auf das jeweilige Wicklungsende 11 wird nachstehend näher erläutert.

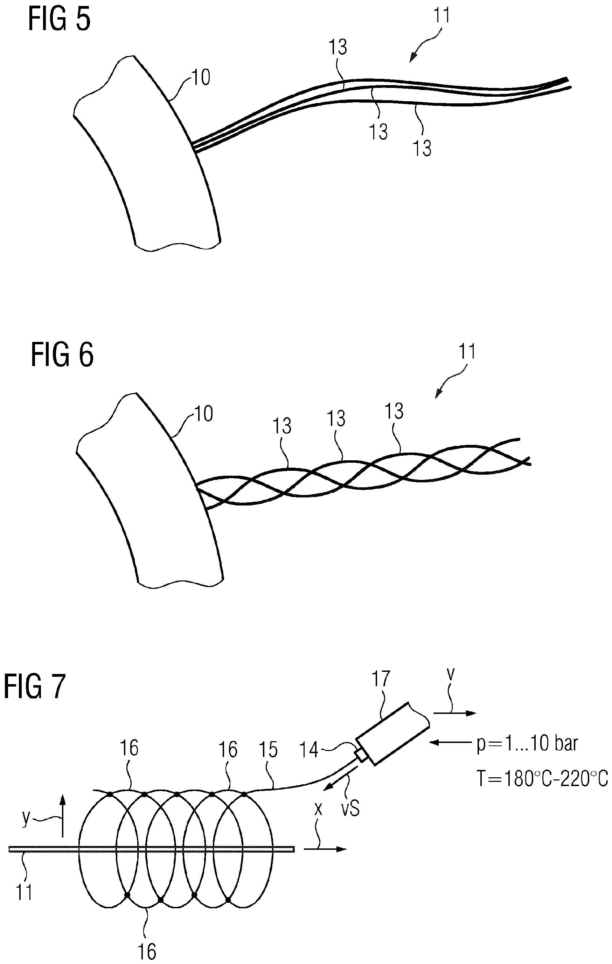

In der Regel weisen die Wicklungsenden 11 entsprechend der Darstellung in FIG 5 jeweils mehrere Drähte 13 auf. In diesem Fall werden die Drähte 13 entsprechend der Darstellung in FIG 6 zunächst miteinander verdrillt. Im Einzelfall kann das Verdrillen jedoch auch unterbleiben. Nachfolgend wird davon ausgegangen, dass die Drähte 13 miteinander verdrillt werden.

Nach dem Verdrillen wird das entsprechende Wicklungsende 11 mit dem Isolator 12 umhüllt. Zu diesem Zweck wird entsprechend der Darstellung in FIG 7 mittels einer Düse 14 ein Strang 15 auf das entsprechende Wicklungsende 11 aufgespritzt. Das zugehörige thermoplastische Material wird der Düse 14 zu diesem Zweck mit einem Druck p und einer Arbeitstemperatur T zugeführt. Der Druck p liegt in der Regel zwischen 1 bar und 10 bar. Die Arbeitstemperatur T liegt in der Regel zwischen 180 °C und 220 °C. Sofern das thermoplastische Material eine definierte Schmelztemperatur aufweist, liegt die Schmelztemperatur dementsprechend unter der Arbeitstemperatur T. Sofern das thermoplastische Material keine definierte Schmelztemperatur aufweist, gilt der entsprechende Sachverhalt für die Glasübergangstemperatur des thermoplastischen Materials. Vorzugsweise sollte die Schmelztemperatur bzw. die Glasübergangstemperatur aber bei mindestens 110 °C liegen. Auch eine höhere Schmelztemperatur bzw. Glasübergangstemperatur von 150 °C und mehr, insbesondere von bis zu 180 °C und teilweise sogar bis 200 °C, ist möglich.

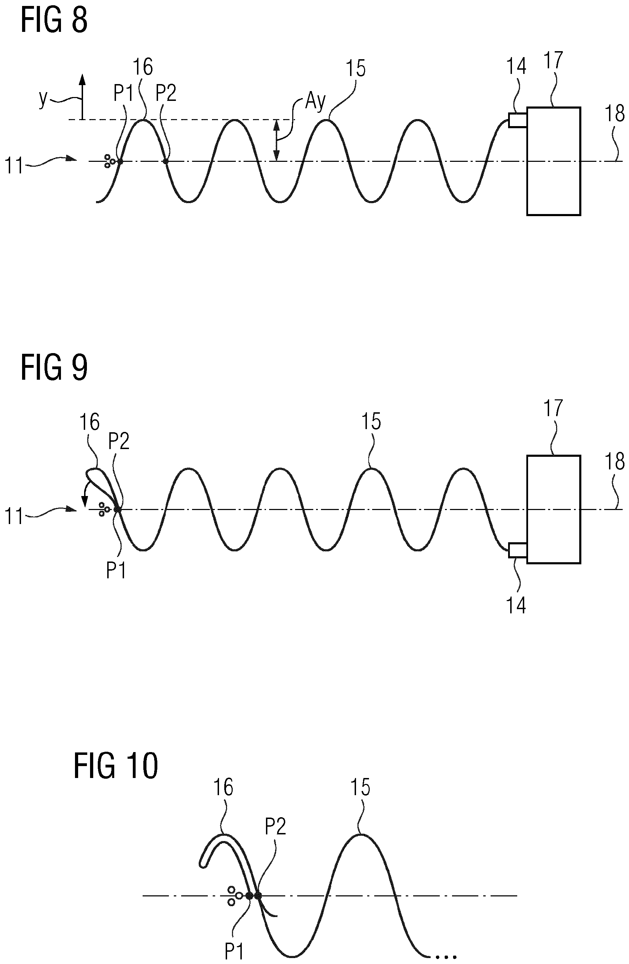

Der Strang 15 tritt mit einer Geschwindigkeit vS aus der Düse 14 aus. Während des Aufspritzens des Stranges 15 wird die Düse 14 relativ zum jeweiligen Wicklungsende 11 entlang der Längserstreckung x des jeweiligen Wicklungsendes 11 verfahren. Dieser Verfahrbewegung entlang der Längserstreckung x wird eine oszillierende Bewegung der Düse 14 quer zur Längserstreckung x des jeweiligen Wicklungsendes 11 überlagert. Die oszillierende Bewegung der Düse 14 quer zur Längserstreckung x weist eine Oszillationsfrequenz f auf. Die oszillierende Bewegung der Düse 14 quer zur Längserstreckung x ist weiterhin derart bestimmt, dass der Strang 15 in einer Querrichtung y eine Amplitude Ay aufweist. Die Amplitude Ay ist gemäß den FIG 7 und 8 derart bestimmt, dass der Strang 15 - also das thermoplastische Material, aus dem der fertige Isolator 12 besteht - sich in Form von Schlingen 16 auf das jeweilige Wicklungsende 11 und um das jeweilige Wicklungsende 11 herum legt.

Die FIG 8 bis 10 zeigen exemplarisch zwei Punkte P1, P2 des Stranges 15, die zwischen sich eine einzelne Schlinge 16 bilden und wie sich diese Schlinge 16 sich auf das jeweilige Wicklungsende 11 und um das jeweilige Wicklungsende 11 herum legt. Zunächst trifft gemäß FIG 8 der Punkt P1 des Stranges 15 auf das jeweilige Wicklungsende 11 auf. Sodann wird der Strang 15 in Querrichtung y von dem jeweiligen Wicklungsende 11 weg bewegt, bis er in Querrichtung y seine maximale Auslenkung erreicht. Wenn der Strang 15 wieder das jeweilige Wicklungsende 11 quert, trifft gemäß FIG 9 der Punkt P2 des Stranges 15 auf das jeweilige Wicklungsende 11 auf. Die Schlinge 16 zwischen den beiden Punkten P1, P2 ist dadurch gebildet. Diese Schlinge 16 legt sich sodann aufgrund des Umstands, dass die beiden Punkte P1, P2 auf dem jeweiligen Wicklungsende 11 bereits fixiert sind und die Schlinge 16 schwingt, entsprechend der Darstellung in FIG 10 um das jeweilige Wicklungsende 11 herum. Der Vorgang wiederholt sich sodann auf der anderen Seite, so dass sich abwechselnd von links und von rechts jeweils eine Schlinge 16 auf das jeweilige Wicklungsende 11 und um das jeweilige Wicklungsende 11 herum legt.

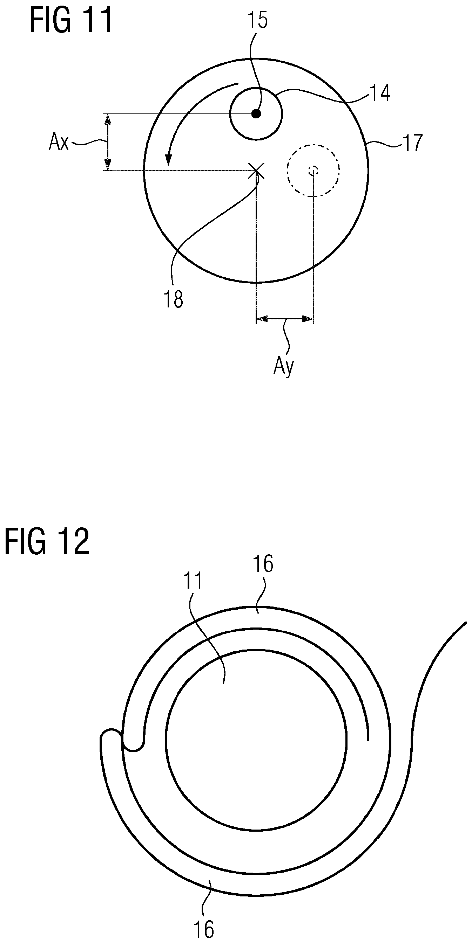

Es ist möglich, dass die Verfahrbewegung der Düse 14 mit einer konstanten Verfahrgeschwindigkeit v entlang der Längserstreckung x des jeweiligen Wicklungsendes 11 erfolgt. Vorzugsweise aber setzt sich die Verfahrbewegung der Düse 14 entlang der Längserstreckung x des jeweiligen Wicklungsendes 11 aus einer Basisbewegung und einer Zusatzbewegung zusammen. Die Basisbewegung ist eine kontinuierliche Bewegung entlang der Längserstreckung x des jeweiligen Wicklungsendes 11 mit der festen (= konstanten) Verfahrgeschwindigkeit v. Die Zusatzbewegung ist eine Bewegung, die mit einer Amplitude Ax und einer Zusatzfrequenz fZ oszilliert. Beispielsweise kann die Düse 14 entsprechend der Darstellung in FIG 11 auf einem Düsenkopf 17 angeordnet sein und dort mit einer bestimmten Drehzahl um eine Drehachse 18 rotieren. In diesem Fall ist zum einen die Oszillationsfrequenz f gleich der Zusatzfrequenz fZ. Weiterhin sind in diesem Fall die oszillierende Bewegung der Düse 14 (also die Bewegung des Stranges 15 in Querrichtung y) und die Zusatzbewegung um 90° gegeneinander phasenversetzt. Zu denjenigen Zeitpunkten, zu denen die Zusatzbewegung ihre Umkehrpunkte erreicht, wird somit der Strang 15 in Querrichtung y mit maximaler Geschwindigkeit bewegt und umgekehrt. Derartige Düsenköpfe 17 sind Fachleuten bekannt. Insbesondere werden derartige Düsenköpfe 17 von der Firma Nordsen hergestellt und vertrieben. Es ist aber auch möglich, die beiden Bewegungen unabhängig voneinander zu realisieren. In diesem Fall können sowohl die Amplituden Ax, Ay als auch die Frequenzen fZ, f unabhängig voneinander gewählt werden.

Vorzugsweise ist die feste Verfahrgeschwindigkeit v kleiner als das Vierfache des Produkts der Amplitude Ax und der Zusatzfrequenz fZ. Vorzugsweise gilt also v < 4AxfZ. Dadurch wird erreicht, dass in Längserstreckung x des jeweiligen Wicklungsendes 11 aufeinanderfolgende Schlingen 16 einander überlappen. Vorzugsweise ist die feste Verfahrgeschwindigkeit v sogar kleiner als das Produkt der Amplitude Ax und der Zusatzfrequenz fZ. Vorzugsweise gilt also sogar v < AxfZ. Dadurch wird in Längsrichtung x des jeweiligen Wicklungsendes 11 gesehen besonders zuverlässig eine vollständige Überdeckung des jeweiligen Wicklungsendes 11 erreicht. Insbesondere besteht der Isolator 12 dadurch aus mehreren überlagerten Strängen.

Sofern die Bewegung der Düse 14 in Richtung der Längserstreckung x und die Oszillationsfrequenz f und die Amplitude Ay geeignet aufeinander abgestimmt sind, reicht es aus, das thermoplastische Material in einem einzigen Arbeitsgang und aus einer einzigen Richtung auf das jeweilige Wicklungsende 11 aufzuspritzen. Dennoch kann entsprechend der Darstellung in FIG 12 in Umfangsrichtung um das jeweilige Wicklungsende 11 herum gesehen eine vollständige Überdeckung des jeweiligen Wicklungsendes 11 erfolgen.

Eine Schichtdicke des Isolators 12 kann nach Bedarf eingestellt werden. Im Regelfall wird sie zwischen 0,1 mm und 1,0 mm liegen. Im Einzelfall sind jedoch Abweichungen von diesen Werten möglich.

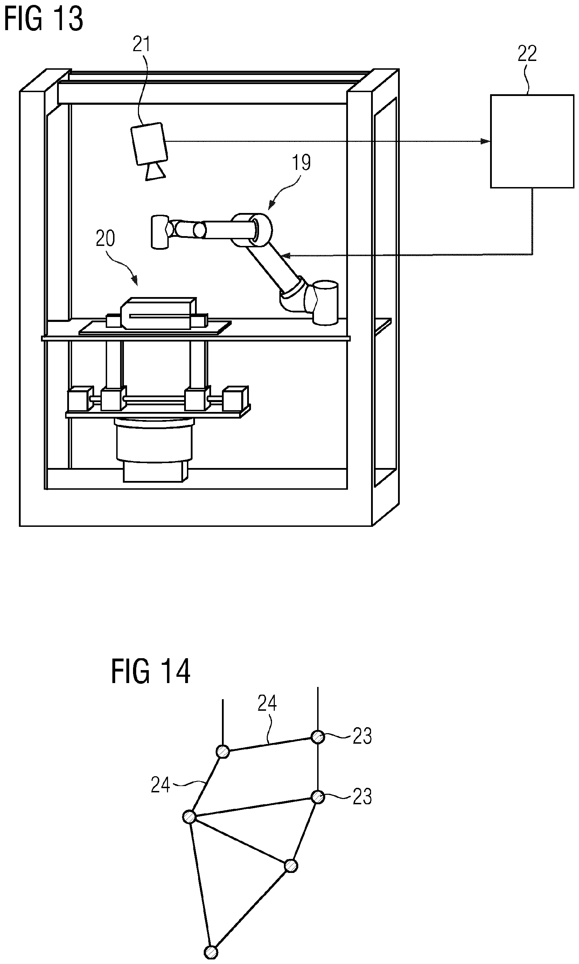

Durch die neuartige Art und Weise, den Isolator 12 auf die Wicklungsenden 11 aufzubringen, ist es möglich, dass das Aufspritzen des thermoplastischen Materials vollautomatisch erfolgt. Beispielsweise kann entsprechend der Darstellung in FIG 13 eine entsprechende Fertigungseinrichtung einen Roboter 19 aufweisen, mittels dessen das Aufspritzen erfolgt. Je nach Art und Weise der Fixierung des Stators 2 in einer Haltevorrichtung 20 der Fertigungseinrichtung ist es möglich, dass die Wicklungsenden 11 sich jeweils an definierten Orten befinden. Alternativ ist es möglich, dass die Fertigungseinrichtung ein optisches Erfassungssystem 21 aufweist, mittels derer vor dem Aufspritzen des thermoplastischen Materials auf die Wicklungsenden 11 der Ort und der Verlauf der Wicklungsenden 11 erfasst werden. Das optische Erfassungssystem 21 kann beispielsweise als 3-D-Kamera ausgebildet sein. Im Falle einer optischen Erfassung können der erfasste Ort und der erfasste Verlauf der Wicklungsenden 11 einer Steuereinrichtung 22 zugeführt werden. Die Steuereinrichtung 22 ist dadurch in der Lage, den erfassten Ort und den erfassten Verlauf der Wicklungsenden 11 beim Verfahren der Düse 14 entlang der Längserstreckung x des jeweiligen Wicklungsendes 11 und bei der oszillierenden Bewegung der Düse 14 quer zur Längserstreckung x des jeweiligen Wicklungsendes 11 entsprechend zu berücksichtigen.

Der Isolator 12 kann nach Bedarf als vollständig geschlossene Struktur oder als netzartige Struktur ausgebildet sein. Im letztgenannten Fall bildet der Isolator 12 entsprechend der Darstellung in FIG 14 ein flächiges, verschmolzenes Gitternetz, das eine Vielzahl von Knotenpunkten 23 und eine Vielzahl von strebenartigen Verbindungen 24 aufweist. Die strebenartigen Verbindungen 24 sind diejenigen Bereiche des Gitternetzes, die in sich unverzweigt sind. Die Knotenpunkte 23 sind diejenigen Bereiche des Gitternetzes, von denen jeweils mindestens drei strebenartigen Verbindungen 24 abgehen. Von den Knotenpunkten 23 und den strebenartigen Verbindungen 24 sind in FIG 14 nur einige wenige mit ihrem Bezugszeichen versehen, um FIG 14 nicht unnötig zu überfrachten.

Im Rahmen der Aufbringung der Schlingen 16 auf die Wicklungsenden 11 können viele Parameter variiert werden. Neben dem Material des Isolators 12 sind dies beispielsweise der Durchmesser des Stranges 15, die Amplituden Ax, Ay, die Frequenzen f, fZ, der Druck p, die Arbeitstemperatur T, der Abstand der Düse 14 von dem jeweiligen Wicklungsende 11, die Geschwindigkeit v und andere mehr. In einem konkreten Versuch wurde beispielsweise ein Klebstoff auf der Basis eines Polyolefins mit einer Schmelztemperatur von ca. 200 °C verwendet. Der Klebstoff wurde mit einer Arbeitstemperatur T von 220 °C und einem Druck p von 3 bar auf die Wicklungsenden 11 gespritzt. Der Klebstoff trat mit einer Geschwindigkeit vS von ca. 5 m/s aus der Düse 14 aus. Der Abstand der Düse 14 von dem jeweiligen Wicklungsende 11 betrug ca. 8 cm, die Drehzahl der Düse 14 lag bei 600 U/min. Die translatorische Geschwindigkeit v des Düsenkopfs 17 betrug 3 cm/s. Die Schlingen 16 hafteten sehr gut auf den Wicklungsenden 11 und führten zu einer vollständigen Überdeckung der Wicklungsenden 11.

Zusammengefasst betrifft die vorliegende Erfindung somit folgenden Sachverhalt:
Ein Stator 2 einer elektrischen Maschine 1, insbesondere einer rotatorischen elektrischen Maschine, weist ein Blechpaket 7 auf. In das Blechpaket 7 sind Nuten 9 eingebracht. In die Nuten 9 sind die Wicklungen 10 eines mehrphasigen Wicklungssystems eingebracht. Die Wicklungen 10 Wicklungsenden 11 auf, die über eine Teillänge mit einem Isolator 12 umhüllt sind. Zum Umhüllen der Wicklungsenden 11 mit dem Isolator 12 wird mittels einer Düse 14 ein Strang 15 eines thermoplastischen Materials auf die Wicklungsenden 11 aufgespritzt. Die Düse 14 wird während des Aufspritzens relativ zum jeweiligen Wicklungsende 11 entlang der Längserstreckung x des jeweiligen Wicklungsendes 11 verfahren. Dem Verfahren entlang der Längserstreckung x wird eine oszillierende Bewegung der Düse 14 quer zur Längserstreckung x des jeweiligen Wicklungsendes 11 überlagert. Dadurch legt das thermoplastische Material sich in Form von Schlingen 16 auf das jeweilige Wicklungsende 11 und um das jeweilige Wicklungsende 11 herum.

Die vorliegende Erfindung weist viele Vorteile auf. So kann beispielsweise das erfindungsgemäße Herstellungsverfahren vollautomatisiert ausgeführt werden. Auch weist der Isolator 12 eine sehr gute Haftung auf dem jeweiligen Wicklungsende 11 auf. Auf seiner Außenseite, also der von dem jeweiligen Wicklungsende 11 abgewandten Seite, ist der Isolator 12 hingegen bereits wenige Sekunden nach dem Aufbringen auf das jeweilige Wicklungsende 11 erkaltet und damit klebfrei. Es kann stets ein und dasselbe thermoplastische Material verwendet werden. In der Regel kann auch die Ansteuerung der Fertigungseinrichtung einheitlich erfolgen. Kosten können reduziert werden. Menschliche Fehler sind nahezu ausgeschlossen. Die Taktzeit - d.h. die Zeit die für das Aufbringen einer einzelnen Isolierung 12 benötigt wird - kann reduziert werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. Die unabhängigen Ansprüche definieren den Schutzumfang der Erfindung.

## Patentansprüche

1. Herstellungsverfahren für einen Stator (2) einer elektrischen Maschine (1), insbesondere einer rotatorischen elektrischen Maschine,
- wobei der Stator (2) ein Blechpaket (7) aufweist,
- wobei in das Blechpaket (7) Nuten (9) eingebracht sind und in die Nuten (9) die Wicklungen (10) eines mehrphasigen Wicklungssystems eingebracht sind,
- wobei die Wicklungen (10) Wicklungsenden (11) aufweisen, die über eine Teillänge mit einem Isolator (12) umhüllt werden,
**dadurch gekennzeichnet,**
- **dass** zum Umhüllen der Wicklungsenden (11) mit dem Isolator (12) mittels einer Düse (14) ein Strang (15) eines thermoplastischen Materials auf die Wicklungsenden (11) aufgespritzt wird und
- **dass** die Düse (14) während des Aufspritzens relativ zum jeweiligen Wicklungsende (11) entlang der Längserstreckung (x) des jeweiligen Wicklungsendes (11) verfahren wird und dem Verfahren entlang der Längserstreckung (x) eine mit einer Oszillationsfrequenz (f) oszillierende Bewegung der Düse (14) quer zur Längserstreckung (x) des jeweiligen Wicklungsendes (11) überlagert wird, so dass das thermoplastische Material sich in Form von Schlingen (16) auf das jeweilige Wicklungsende (11) und um das jeweilige Wicklungsende (11) herum legt.

2. Herstellungsverfahren nach Anspruch 1,
**dadurch gekennzeichnet,**
- **dass** die Verfahrbewegung der Düse (14) entlang der Längserstreckung (x) des jeweiligen Wicklungsendes (11) sich aus einer Basisbewegung und einer Zusatzbewegung zusammensetzt,
- **dass** die Basisbewegung eine kontinuierliche Bewegung entlang der Längserstreckung (x) des jeweiligen Wicklungsendes (11) mit einer festen Verfahrgeschwindigkeit (v) ist,
- **dass** die Zusatzbewegung eine mit einer Amplitude (Ax) und einer Zusatzfrequenz (fZ) oszillierende Bewegung ist und
- **dass** die feste Verfahrgeschwindigkeit (v) kleiner als das Vierfache des Produkts der Amplitude (Ax) und der Zusatzfrequenz (fZ) ist, vorzugsweise kleiner als das Produkt der Amplitude (Ax) und der Zusatzfrequenz (fZ).

3. Herstellungsverfahren nach Anspruch 2,
**dadurch gekennzeichnet,**
**dass** die Oszillationsfrequenz (f) gleich der Zusatzfrequenz (fZ) ist und dass die oszillierende Bewegung der Düse (14) und die Zusatzbewegung um 90° gegeneinander phasenversetzt sind.

4. Herstellungsverfahren nach Anspruch 1, 2 oder 3,
**dadurch gekennzeichnet,**
**dass** das thermoplastische Material der Düse (14) mit einem Arbeitsdruck (p) zugeführt wird, der zwischen 1 bar und 10 bar liegt.

5. Herstellungsverfahren nach einem der obigen Ansprüche,
**dadurch gekennzeichnet,**
**dass** das thermoplastische Material der Düse (14) mit einer Arbeitstemperatur (T) zugeführt wird, die zwischen 180 °C und 220 °C liegt.

6. Herstellungsverfahren nach einem der obigen Ansprüche,
**dadurch gekennzeichnet,**
**dass** das thermoplastische Material ein Polyolefin oder ein Polyamid ist.

7. Herstellungsverfahren nach einem der obigen Ansprüche,
**dadurch gekennzeichnet,**
**dass** das Aufspritzen des thermoplastischen Materials in einem einzigen Arbeitsgang und aus einer einzigen Richtung erfolgt.

8. Herstellungsverfahren nach einem der obigen Ansprüche,
**dadurch gekennzeichnet,**
**dass** die Wicklungsenden (11) jeweils mehrere Drähte (13) aufweisen und dass die Drähte (13) vor dem Aufspritzen des thermoplastischen Materials miteinander verdrillt werden.

9. Herstellungsverfahren nach einem der obigen Ansprüche,
**dadurch gekennzeichnet,**
**dass** das Aufspritzen des thermoplastischen Materials vollautomatisch erfolgt, insbesondere mit einem Roboter (19).

10. Herstellungsverfahren nach Anspruch 9,
**dadurch gekennzeichnet,**
**dass** vor dem Aufspritzen des thermoplastischen Materials auf die Wicklungsenden (11) mittels eines optischen Erfassungssystems (21) der Ort und der Verlauf der Wicklungsenden (11) erfasst werden und dass der erfasste Ort und der erfasste Verlauf der Wicklungsenden (11) beim Verfahren der Düse (14) entlang der Längserstreckung (x) des jeweiligen Wicklungsendes (11) und bei der oszillierenden Bewegung der Düse (14) quer zur Längserstreckung (x) des jeweiligen Wicklungsendes (11) berücksichtigt werden.

11. Stator einer elektrischen Maschine (1), insbesondere einer rotatorischen elektrischen Maschine,
- wobei der Stator durch das Herstellungsverfahren nach einem der Ansprüche 1-10 hergestellt ist.

12. Stator nach Anspruch 11,
**dadurch gekennzeichnet,**
**dass** das thermoplastische Material ein Polyolefin oder ein Polyamid ist.

13. Stator nach Anspruch 11 oder 12,
**dadurch gekennzeichnet,**
**dass** die Wicklungsenden (11) jeweils mehrere Drähte (13) aufweisen und dass die Drähte (13) miteinander verdrillt sind.

14. Elektrische Maschine, insbesondere rotatorische elektrische Maschine, wobei die elektrische Maschine einen Stator (2) aufweist,
**dadurch gekennzeichnet,**
**dass** der Stator (2) nach Anspruch 11, 12 oder 13 ausgebildet ist.

## Claims

1. Manufacturing process for a stator (2) of an electric machine (1), in particular of a rotating electric machine,
- wherein the stator (2) has a laminated core (7),
- wherein grooves (9) are introduced into the laminated core (7) and the windings (10) of a multiphase winding system are introduced into the grooves (9),
- wherein the windings (10) have winding ends (11), which are encased with an insulator (12) across a partial length,
**characterised in that**
- in order to encase the winding ends (11) with the insulator (12) by means of a nozzle (14), a strand (15) of a thermoplastic material is extruded onto the winding ends (11) and
- that during the extrusion the nozzle (14) is moved relative to the respective winding end (11) along the longitudinal extent (x) of the respective winding end (11) and a movement of the nozzle (14), which oscillates with an oscillation frequency (f), at right angles to the longitudinal extent (x) of the respective winding end (11) overlays the process along the longitudinal extent (x), so that the thermoplastic material lies on the respective winding end (11) and about the respective winding end (11) in the form of loops (16).

2. Manufacturing process according to claim 1,
**characterised in that**
- the movement of the nozzle (14) along the longitudinal extent (x) of the respective winding end (11) is composed of a basic movement and an additional movement,
- the basic movement is a continuous movement along the longitudinal extent (x) of the respective winding end (11) with a fixed movement speed (v),
- the additional movement is a movement which oscillates with an amplitude (Ax) and an additional frequency (fZ) and
- the fixed movement speed (v) is less than four times the product of the amplitude (Ax) and the additional frequency (fZ), preferably less than the product of the amplitude (Ax) and the additional frequency (fZ).

3. Manufacturing process according to claim 2,
**characterised** i**n that**
the oscillation frequency (f) equates to the additional frequency (fZ) and that the oscillating movement of the nozzle (14) and the additional movement are phase offset by 90° relative to one another.

4. Manufacturing process according to claim 1, 2 or 3,
**characterised in that**
the thermoplastic material of the nozzle (14) is preferably supplied with a working pressure (p) which lies between 1 bar and 10 bar.

5. Manufacturing process according to one of the above claims,
**characterised in that**
the thermoplastic material is supplied to the nozzle (14) with a working temperature (T), which lies between 180 °C and 220 °C.

6. Manufacturing process according to one of the above claims,
**characterised in that**
the thermoplastic material is a polyolefin or a polyamide.

7. Manufacturing process according to one of the above claims,
**characterised in that**
the thermoplastic material is extruded in a single work step and from a single direction.

8. Manufacturing process according to one of the above claims,
**characterised in that**
the winding ends (11) each have a number of wires (13) and that the wires (13) are twisted to one another before extruding the thermoplastic material.

9. Manufacturing process according to one of the above claims,
**characterised in that**
the thermoplastic material is extruded fully automatically, in particular with a robot (19).

10. Manufacturing process according to claim 9,
**characterised in that**
before extruding the thermoplastic material onto the winding ends (11) by means of a visual detection system (21), the location and the course of the winding ends (11) are detected and that the detected location and the detected course of the winding ends (11) are taken into account when the nozzle (14) is moved along the longitudinal extent (x) of the respective winding end (11) and when the nozzle (14) moves in an oscillating manner at right angles to the longitudinal extent (x) of the respective winding end (11).

11. Stator of an electric machine (1), in particular of a rotating electric machine,
- wherein the stator is manufactured by means of the manufacturing process according to one of claims 1 - 10.

12. Stator according to claim 11,
**characterised in that**
the thermoplastic material is a polyolefin or a polyamide.

13. Stator according to claim 11 or 12,
**characterised in that**
the winding ends (11) each have a number of wires (13) and that the wires (13) are twisted with one another.

14. Electric machine, in particular rotating electric machine, wherein the electric machine has a stator (2),
**characterised in that**
the stator (2) is embodied according to claim 11, 12 or 13.

## Revendications

1. Procédé de fabrication d'un stator (2) d'une machine (1) électrique, notamment d'une machine électrique tournante,
- dans lequel le stator (2) a un paquet (7) de tôles,
- dans lequel des encoches (9) sont ménagées dans le paquet (7) de tôle et les enroulements (10) d'un système d'enroulement polyphasé sont introduits dans les encoches (9),
- dans lequel les enroulements (10) ont des extrémités (11) d'enroulement, qui sont gainées d'un isolant (12) sur une partie de leur longueur,
**caractérisé**
- **en ce que**, pour gainer les extrémités (11) des enroulements de l'isolant (12) on pulvérise au moyen d'une buse (14) un cordon (15) d'une matière thermoplastique sur les extrémités (11) de l'enroulement et
- **en ce que** l'on déplace la buse (14) pendant la projection par rapport à l'extrémité (11) respective de l'enroulement suivant l'étendue (x) en longueur de l'extrémité (11) respective de l'enroulement et on superpose au déplacement le long de l'étendue (x) en longueur un mouvement oscillant, à une fréquence (f) d'oscillation, de la buse (14) transversalement à l'étendue (x) en longueur de l'extrémité (11) respective de l'enroulement, de manière à mettre la matière thermoplastique sous la forme de boucle (16) sur l'extrémité (11) respective de l'enroulement et autour de l'extrémité (11) respective de l'enroulement.

2. Procédé de fabrication suivant la revendication 1,
**caractérisé**
- **en ce que** le mouvement de déplacement de la buse (14) suivant l'étendue (x) en longueur de l'extrémité (11) respective de l'enroulement se compose d'un mouvement de base et d'un mouvement supplémentaire.
- **en ce que** le mouvement de base est un mouvement continu suivant l'étendue (x) en longueur de l'extrémité (11) de l'enroulement à une vitesse (v) de déplacement fixe,
- **en ce que** le mouvement supplémentaire est un mouvement oscillant ayant une amplitude (Ax) et une fréquence (fZ) supplémentaire et
- **en ce que** la vitesse (v) fixe de déplacement est plus petite que quatre fois le produit de l'amplitude (Ax) par la fréquence (fZ) supplémentaire, de préférence plus petit que le produit de l'amplitude (Ax) par la fréquence (fZ) supplémentaire.

3. Procédé de fabrication suivant la revendication 2 **caractérisé en ce que** la fréquence (f) d'oscillation est égale à la fréquence (fZ) supplémentaire et **en ce que** le mouvement oscillant de la buse (14) et le mouvement supplémentaire sont déphasés l'un par rapport à l'autre de 90°.

4. Procédé de fabrication suivant l'une des revendications 1, 2 ou 3 **caractérisé en ce que** l'on apporte la matière thermoplastique à la buse (14) à une pression (p) de travail comprise entre 1 bar et 10 bar.

5. Procédé de fabrication suivant l'une des revendications précédentes, **caractérisé en ce que** l'on apporte la matière thermoplastique à la buse (14) à une température (T) de travail comprise entre 180°c et 220°C.

6. Procédé de fabrication suivant l'une des revendications précédentes, **caractérisé en ce que** la matière plastique est une polyoléfine ou un polyamide.

7. Procédé de fabrication suivant l'une des revendications précédentes, **caractérisé en ce que** la projection de la matière thermoplastique s'effectue en une seule phase de travail et dans une seule direction.

8. Procédé de fabrication suivant l'une des revendications précédentes, **caractérisé**
**en ce que** les extrémités (11) de l'enroulement ont respectivement plusieurs fils (13) métalliques et en ce que les fils (13) sont torsadés entre eux avant la projection de la matière thermoplastique.

9. Procédé de fabrication suivant l'une des revendications précédentes, **caractérisé en ce que** la projection de la matière thermoplastique a lieu d'une manière entièrement automatique, notamment avec un robot (19).

10. Procédé de fabrication suivant la revendication 9, **caractérisé en ce qu'**avant la projection de la matière thermoplastique sur les extrémités (11) de l'enroulement, on détecte au moyen d'un système (21) optique de détection l'emplacement et le tracé des extrémités (11) de l'enroulement et **en ce que** l'on prend en compte l'emplacement détecté et le tracé détecté des extrémités (11) de l'enroulement lors du déplacement de la buse (14) suivant l'étendue (x) en longueur de l'extrémité (11) respective de l'enroulement et lors du mouvement oscillant de la buse (14) transversalement à l'étendue (x) en longueur de l'extrémité (11) respective de l'enroulement.

11. Stator d'une machine (1) électrique, notamment d'une machine électrique tournante,
- dans lequel le stator est fabriqué par le procédé de fabrication suivant l'une des revendications 1 à 10.

12. Stator suivant la revendication 11, **caractérisé en ce que** la matière thermoplastique est une polyoléfine ou un polyamide.

13. Stator suivant la revendication 11 ou 12, **caractérisé en ce que** les extrémités (11) de l'enroulement ont respectivement plusieurs fils (13) métalliques et **en ce que** les fils (13) sont torsadés entre eux.

14. Machine électrique, notamment machine électrique tournante, dans laquelle la machine électrique a un stator (2)
**caractérisé en ce que**
le stator (2) est constitué suivant la revendication 11, 12 ou 13.
